# EUROPEAN PATENT SPECIFICATION

(11) **EP 3 679 291 B1**
(45) Date of publication and mention of the grant of the patent: **11.09.2024**
(21) Application number: 17754805.4
(22) Date of filing: 31.07.2017
(51) Int. Cl.: F17C 7/00

(54) **HYDROGEN REFUELING SYSTEM AND METHOD OF HYDROGEN REFUELING**
WASSERSTOFFAUFTANKSYSTEM UND VERFAHREN ZUM WASSERSTOFFAUFTANKEN
SYSTÈME DE RAVITAILLEMENT EN HYDROGÈNE ET PROCÉDÉ DE RAVITAILLEMENT EN HYDROGÈNE

(43) Date of publication of application: 15.07.2020
(73) Proprietor: L'Air Liquide, Société Anonyme pour l'Etude et l'Exploitation des Procédés Georges Claude, 75007 Paris (FR)
(72) Inventor: WERLEN, Etienne, Tokyo 108-8509 (JP); FRANCOIS, Thibaut, 38360 Sassenage (FR)
(74) Representative: Air Liquide
(86) International application number: PCT/JP2017/027679
(87) International publication number: WO 2019/026126

(56) References cited:
- US-A1- 2017 023 180
- US-A1- 2017 138 539
- US-B2- 8 708 005

## Description

### Background Art

The present invention relates to a hydrogen refueling system, for example a hydrogen refueling station (HRS).

### Description of the Related Art

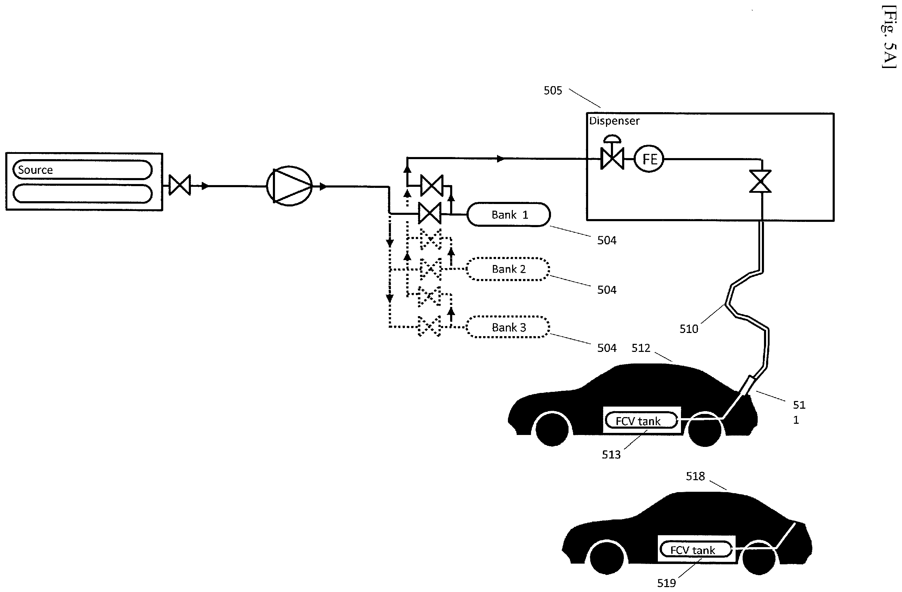

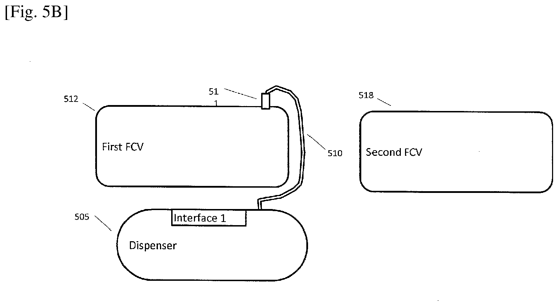

In hydrogen refueling stations (HRS), which purpose is to refuel Fuel Cell Vehicles (FCV) (512, 518) with hydrogen, a dispenser (505) is typically equipped with one hose (510), sometimes two hoses (typically one for refueling at 35 MPa and one for refueling at 70 MPa) as shown figure 5A and 5B. Also, in order to comply with current refueling protocols and achieve fast refueling of FCV (typical target is 5 kg within 3 minutes or according to the SAE J 2601), some high pressure (HP) buffer bank(s) (504) are installed upstream the dispenser (505) to provide high H₂flow rate during refueling. The HP buffer bank(s) (4) need to be filled at a minimum pressure before to start refueling in order to follow the pressure ramp specified by the refueling protocol and to achieve successful refueling.

HRS are typically equipped only with one dispenser (505). However, some peak load hours exist where several FCVs (512, 518) will come within a short period of time.

When one FCV (518) is queuing, the typical sequence is as follows.

Upon termination of refueling of the first FCV (512), customer or operator has to disconnect the nozzle (511) and place it back on the dispenser (505).

First FCV (512) customer has to proceed to payment.

First FCV(512) is moved out of the dispenser (505) area.

Second FCV (518) can move in front of the dispenser (505).

Second FCV (518) customer initiates payment by card (if applicable).

Customer or operator connects the refueling nozzle (511) to the second FCV (518).

If HP buffers (504) have not yet been refilled to the target pressure, customer has to wait for the end of HP buffers (504) refilling.

Customer or operator can press the start button. After pressing the start button, it makes to launch the connection leak test and to begin refueling.

Typically, this complete sequence between the end of H₂ transfer to the first FCV (512) to the beginning of H₂ transfer to the second FCV (518)can take 3 minutes or more.

Also, HP buffer(s) (504) refilling target pressure is a fixed value predefined to achieve successful refueling of a FCV (512, 518) having a tank (513, 519) almost empty. As a consequence, a customer may wait for the HP buffer(s) (504) to be refilled up to target pressure, even though his tank has significant remaining pressure, and successful refueling could be achieved with lower target pressure(s). In addition, precooling power may be sized by considering some interval between two FCV(512, 518) refueling and some timer may need to be elapsed before authorizing refueling of the next FCV (518). As a consequence, a customer may wait for the re-accumulation of enough cold to perform refueling of a tank almost empty even though his tank (519) has significant remaining pressure, and successful refueling could be achieved with shorter delay.

Document D1, JP2015190596 A1, discloses that the determining unit determines the number of vehicles which is capable of refueling with H₂ within a prescribed time based on the acquired pressure in the accumulator, and determines the waiting time of the vehicle for refueling based on the filling time required for filling the accumulator with hydrogen using the hydrogen stored in the accumulator and the sum of the number of vehicles that are refueling H₂ by the dispenser and the number of vehicles that are waiting for refueling H₂ by the dispenser. And the paragraph [0043]in this document disclose that since the remaining pressure in the tank of the vehicles that are waiting for refueling H₂ is unknown, the specified period of time(for example 5 minutes) for refueling process is required.

Document D2, US6901302 B1, discloses some network communication with a fleet of vehicles circulating in view of anticipating the load of HRS (i.e. producing the appropriate quantity of H₂ to refuel the vehicles). And this document discloses the transmission of remaining quantity or remaining pressure in the vehicle to the station (HRS) for controlling the station load in view of filling time.

US 8 708 005 B2 discloses a gas filling system.

### SUMMARY OF THE INVENTION

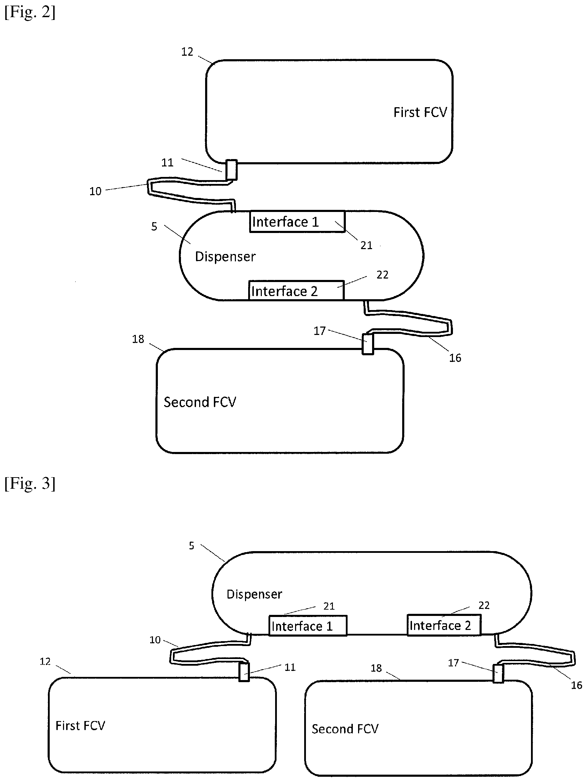

In the prior art system of figures 3 to 4,since the next vehicle can move to the dispenser and connect refueling hose only after previous vehicle has gone away, some operations other than actual H₂ transfer to vehicle tank, such as payment completion process, car moving time, initiation payment process, etc., must be counted as waiting time for the next vehicle.

The document 1 only disclose about the improvement the user's convenience by calculating and displaying the waiting time of the vehicle based on the states such as the number of vehicles being filled, the number of waiting vehicles, the pressure in the accumulator, and H₂ filling time to the accumulator.

The document 2 only disclose that configured to receive amount of H₂ in the tank from a vehicle that is traveling to HRS, to compare with the amount of hydrogen stock in HRS and to judge the excess/deficiency level, to operate the hydrogen generator according to the excess/deficiency level and to keep the hydrogen stock.

Therefore, the prior art system of figures 3 to 4, D1 and D2 don't reduce the waiting time of the next vehicle in one dispenser.

The purpose of this patent is to describe solutions to minimize customer waiting time with keeping only one dispenser (5) at HRS, or having pieces of equipment shared by two dispensers (5). This invention can provide a hydrogen refueling system capable to reduce a waiting time for refueling H₂ to the vehicle.

As first invention, a hydrogen refueling system in accordance with independent claim 1 is provided. The system includes as main design characteristic to have a H₂ dispensing system (dispenser) with two H₂refueling hoses which has only one H₂ flow control valve and/or only one H₂ cooling heat exchanger and/or only one H₂ flow metering system.

As first invention, the hydrogen refueling system including:
at least one H₂supply source(1) that stores H₂ which has a first pressure;
compressor(2) that is able to increase H₂ pressure and which can transfer H₂from one container(e.g. MP buffer(3)) or H₂ supply source(1) to another(e.g. MP buffer(3), HP buffer bank(s)(4a, 4b, 4c));
one or several HP buffer bank(s)(4a, 4b, 4c) that store H₂ under various pressures or same pressure ( various predetermined pressures or same predetermined pressure), generally higher than pressure of the H₂ supply source(1);
optionally, one (or more) MP buffer (3(3a, 3b, 3c)) that store H₂ under a pressure ( a predetermined pressure), generally higher than pressure of the H₂supply source (1) and generally lower than the pressure of HP buffer bank(s)(4a, 4b, 4c);
at least one dispenser (5), which can transfer and discharge H₂ from at least one container (e.g. H₂ supply source(1), MP buffer(3), HP buffer bank(s)(4a, 4b, 4c)) and/ or from compressor (2) discharge into the tank (13, 19) of a vehicle;
optionally, one heat exchanger (8), which can cool down H₂before being transferred to the tank(13, 19) of a vehicle and which is fed with a cooling fluid;
first controller(30) that controls the compressor(2) and one or more valve(s)(e.g. 40, 41a, 41b, 41a, 43a, 44a) placed on pipe(s)(i.e. 50, 52, 53, 54a, 55a, 56a) in such a way that, when the station is idle (i.e. no vehicle is refueled or is waiting), depending on pre-determined operation steps, H₂ is transferred from one container (1, 3(3a, 3b, 3c), 4a, 4b, 4c) to another, up to pre-determined target pressure value(s) (Pₛₑₜ) in recipient container(s) (3(3a, 3b, 3c), 4a, 4b, 4c), for example, in the case there is one MP buffer (3), in one operation step controlled by first controller, H₂is transferred from H₂ supply source(1) to MP buffer (3) through the compressor (2) until the pressure in MP buffer (3) reaches a pre-determined target pressure which is higher than the pressure of the H₂ supply source(1), and in other operation steps controlled by first controller (30), H₂is transferred from MP buffer (3) to one HP buffer bank(s) (4a, 4b, 4c) through the compressor (2) until the pressure in HP buffer banks(s) (4a, 4b, 4c) reaches a pre-determined target pressure which is higher than the pressure in MP buffer (3); data processor (35) that, when one vehicle (12,18) is connected to be re-fueled, reads the residual pressure in the tank (13, 19) of the vehicle (12,18), using nozzle (11, 17) IR communication device or pressure sensor (14, 20) and, depending on the residual pressure in vehicle tank (13, 19), depending on pressure in the containers (1, 3(3a, 3b, 3c), 4a, 4b, 4c) and depending on ambient temperature, calculates target pressure value(s) (TP) in one or several containers (1, 3(3a, 3b, 3c), 4a, 4b, 4c) optimized to be sufficient to achieve complete refueling of connected vehicle (12,18).

In case one heat exchanger (8) is present, data processor (35) may as well calculate, depending on the residual pressure in vehicle tank, depending on quantity of H₂ refueled in previous vehicle(s) and depending on ambient temperature, the sufficient conditions to achieve refueling of connected vehicle according to low H₂temperature refueling protocol, such as minimum time interval with previous vehicle or maximum temperature of the heat exchanger (8).

The hydrogen refueling system further includes:
second controller(40) that, when one vehicle (12,18) is connected to be re-fueled, may use the conditions calculated by data processor (35) to decide and execute an optimized sequence that controls the compressor (2) and valves to reach target pressure value(s) (TP) in the container(s) ( 3(3a, 3b, 3c), 4a, 4b, 4c) calculated by the data processor (35).

In the hydrogen refueling system,
the optimized sequence is decided in such a way that the time for being able to reach the conditions calculated by the data processor (35) after connecting a refueling nozzle(11, 17) to the vehicle is a minimum time. This minimum time is zero when sufficient conditions to achieve complete refueling of connected vehicle are already met when the refueling nozzle(11, 17) is connected to the vehicle.

The hydrogen refueling system further includes:
third controller(45) that, when the conditions calculated by data processor (35) are met, controls the compressor (2) and valve(s)(e.g. 40, 41a, 41b, 41a, 42b, 43a, 43b, 44a, 44b, 6, 9, 15) according to a pre-determined strategy and filling protocol, in such a way that H₂ is transferred from at least one container (1, 3(3a, 3b, 3c), 4a, 4b, 4c) to the tank of the vehicle.

The first controller(30)and second controller (40) may control one or more valve(s)(e.g. 40, 41a, 41b, 41a, 43a, 44a) which is(are) placed on pipe(s)(e.g. 50, 52, 53, 54a, 55a, 56a) in order to transfer H₂ from one container (1, 3, 4a, 4b, 4c) to another, either directly or through the compressor(2).

Target pressure value(s)(TP) in the container(s) (3(3a, 3b, 3c), 4a, 4b, 4c) calculated by the data processor (35) may be lower than the pre-determined target pressure value(s)(Pₛₑₜ) in recipient container(s) (3, 4a, 4b, 4c) used by first controller (30). In addition, target pressure values(TP) in HP buffer banks(4a, 4b, 4c) calculated by the data processor (35) may be the same value for all HP buffer banks or different values.

Based on a container order(e.g. HP buffer bank (4a), then HP buffer bank (4b), then HP buffer bank (4c)) that may be calculated depending on remaining pressure in the containers (1, 3, 4a, 4b, 4c), the third controller(45) may control valves (e.g. 40, 41a, 42a, 42b, 43a, 43b, 44a, 44b, 6, 9, 15) to connect one of the containers (1, 3, 4a, 4b, 4c) to the FCV tank(13, 19) and then to refuel H₂ into the FCV tank by balancing pressures between the connected container and the FCV tank (13, 19), and then, after disconnecting the used container, to connect another of the containers (1, 3, 4a, 4b, 4c) to the FCV tank (13, 19) and then to refuel H₂ into the FCV tank (13, 19) by balancing pressures between the connected container and the FCV tank (13, 19). And then, the sequence may be repeated with other containers (1, 3, 4a, 4b, 4c), depending on a pre-defined strategy. For example, the containers order may be calculated to connect first the container having the lowest remaining pressure, and then follow the order of increasing remaining pressure in the containers used to refuel H₂.

When refueling H₂into the FCV tank (13, 19) by switching between containers, balancing pressures between the connected container and the FCV tank (13, 19) may be partial. Changing to the next container may be made when there is still a large pressure difference between the connected container (1, 3, 4a, 4b, 4c) and the FCV tank (13, 19), for example when the refueling flow rate required by fueling protocol cannot be maintained, due to the flow restrictions between the connected container (1, 3, 4a, 4b, 4c) and the FCV tank (13, 19).

In case that there are two or more MP buffers (3(3a 3b 3c)), the pre-determined target pressure value may be the same value for all MP buffers or different values.

In case that there are two or more HP buffer banks(4a, 4b, 4c), the pre-determined target pressure value may be the same value for all HP banks or different values.

As the first invention,
the at least one of dispenser(5) may include,
a control valve(6) that is placed on a main line (57) through which is sent the H₂from the containers (1, 3, 4a, 4b, 4c);
a metering device(7) that is placed downstream the control valve (6) on the main line (57);
a heat exchanger(8) that is placed downstream the metering device(7) on the main line (57) and cools or warms the H₂ through the main line (57);
first and second branch lines (57a, 57b) that are branched from the main line (57) downstream the heat exchanger(8);
first on-off valve(9) that is placed on the first branch line (57a);
second on-off valve(15) that is placed on the second branch line (57b);
first hose(10) that has a first refueling nozzle(11) at its one end part and is connected the first branch line (57a) at its another end part; and
second hose(16) that has a second refueling nozzle(17) at its one end part and is connected the second branch line (57b) at its another end part.

In the first invention,
the at least one of dispenser(5) may include,
first and second interface (21, 22);
the first interface (21) may include first payment interface, first ticket system, and first metering display;
the second interface(22) may include second payment interface, second ticket system, and second metering display.

In the first invention,
the third controller(45) may control first refueling process which is configured to refuel the H₂through the first hose(10) from the first refueling nozzle(11) into first FCV tank(13) of first vehicle(12), and / or
the third controller(45) may control second refueling process which is configured to refuel the H₂through the second hose(16) from the second refueling nozzle(17) into second FCV tank(19) of second vehicle(18);
in case of a first refueling process,
   the data processor(35) may acquire first residual pressure of the first FCV tank(13) which is connected with the first refueling nozzle(1 1) and may calculate sufficient conditions to achieve complete refueling of first vehicle (12);
second controller(40) may use the conditions calculated by data processor (35) to decide and execute an optimized sequence that controls the compressor (2) and valves to reach within a minimum time the target pressure value(s)(TP) in the container(s) (1, 3, 4a, 4b, 4c) calculated by the data processor (35);
when the conditions calculated by data processor (35) are met and provided that H₂ transfer with second nozzle (17) is already finished, third controller (45) may proceed with refueling of first vehicle (12);
in case of the second refueling process,
   the data processor (35) may acquire second residual pressure of the second FCV tank(19) which is connected with the second refueling nozzle(17) and calculate sufficient conditions to achieve complete refueling of second vehicle (18);
second controller(40) may use the conditions calculated by data processor (35) to decide and execute an optimized sequence that controls the compressor (2) and valves to reach within a minimum time the target pressure value(s) (TP) in the container(s) (1, 3, 4a, 4b, 4c) calculated by the data processor (35);
when H₂transfer with first nozzle (11) is finished, transfer of H₂ with first nozzle (11) is finished and when the conditions calculated by data processor (35) are met, third controller (45) may proceed with refueling of second vehicle (18).

In the first invention, the first residual pressure may be measured by first pressure sensor(14) which is placed downstream the first on-off valve(9) on the first branch line (57a), and/or
the second residual pressure may be measured by second pressure sensor(20) which is placed downstream the second on-off valve(15) on the second branch line (57b).

In the first invention, the third controller(45) may control temperature and/or flow rate of cooling fluid which is sent to the heat exchanger(8) to control temperature of the H₂ which is refueled into the FCV tank.

In the first invention, the second controller(40) may calculate an expected waiting time which is period for being able to start refueling process from after completing payment initiation or after connecting the nozzle to the first or second FCV tank and output the expected waiting time to output device; and/or
the second controller(40) may calculate an expected complete time which is period for completing refueling process from after completing payment initiation or after connecting the nozzle to the first or second FCV tank and output the expected complete time to output device.

In the first invention, the dispenser(5) includes two H₂ refueling hoses (10, 16), only one H₂ flow control valve (6) and/or only one H₂ cooling heat exchanger (8) and/or only one H₂ flow metering system (7).

Second invention is a method for operating refueling process in accordance with independent claim 4. The refueling process is
under the condition that two vehicles can be connected at the same time to the H₂ dispensing system and refueling of the second vehicle is started as soon as transfer of H₂ to the first vehicle is finished and conditions calculated by the data processor (35) are met.

As second invention, the method for performing first refueling process which refuels H₂ to first FCV tank(13) of first vehicle(12) and second refueling process which refuels H₂ to second FCV tank(19) of second vehicle(18), the first and second vehicles(12,18) is stopped in refueling range of only one dispenser(5), including:
in case of a first refueling process,
acquiring first residual pressure of the first FCV tank(13) which is connected with the first refueling nozzle(11) and calculating sufficient conditions to achieve complete refueling of first vehicle (12);
using the conditions calculated by data processor (35) to decide and execute an optimized sequence that controls the compressor (2) and valves to reach within a minimum time the target pressure value(s)(TP) in the container(s) (1, 3, 4a, 4b, 4c) calculated by the data processor (35);
proceeding with refueling of first vehicle (12) when the conditions calculated by data processor (35) are met and provided that H₂ transfer with second nozzle (17) is already finished;
in case of the second refueling process,
acquiring second residual pressure of the second FCV tank(19) which is connected with the second refueling nozzle(17) and calculating sufficient conditions to achieve complete refueling of second vehicle (18);
using the conditions calculated by data processor (35) to decide and execute an optimized sequence that controls the compressor (2) and valves to reach within a minimum time the target pressure value(s) (TP) in the container(s) (1, 3, 4a, 4b, 4c) calculated by the data processor (35);
proceeding with refueling of second vehicle (18) when transfer of H₂ with first nozzle (11) is finished and when the conditions calculated by data processor (35) are met.

### Brief Description of Drawings

[fig.1] Fig. 1 illustrates an explanatory diagram showing a hydrogen refilling system according to Embodiment 1.
[fig.2]Fig. 2 illustrates an explanatory diagram showing lay-out of a hydrogen refilling system.
[fig.3]Fig. 3 illustrates an explanatory diagram showing another lay-out of a hydrogen refilling system.
[fig.4]Fig. 4 illustrates an explanatory flowchart showing a dispenser according to Embodiment 1.
[fig.5A]Fig. 5A illustrates an explanatory diagram showing prior art process scheme of a hydrogen refilling system.
[fig.5B]Fig. 5B illustrates an explanatory diagram showing prior art lay-out of a dispenser.

### DETAILED DESCRIPTION OF THE PREFERRED EMBODIMENTS

Several embodiments of the present invention will be explained below. The embodiments explained below are to explain one example of the present invention. The present invention is not limited to the following embodiments at all and includes various types of modifications carried out within the scope of the appended claims.

### (Embodiment 1)

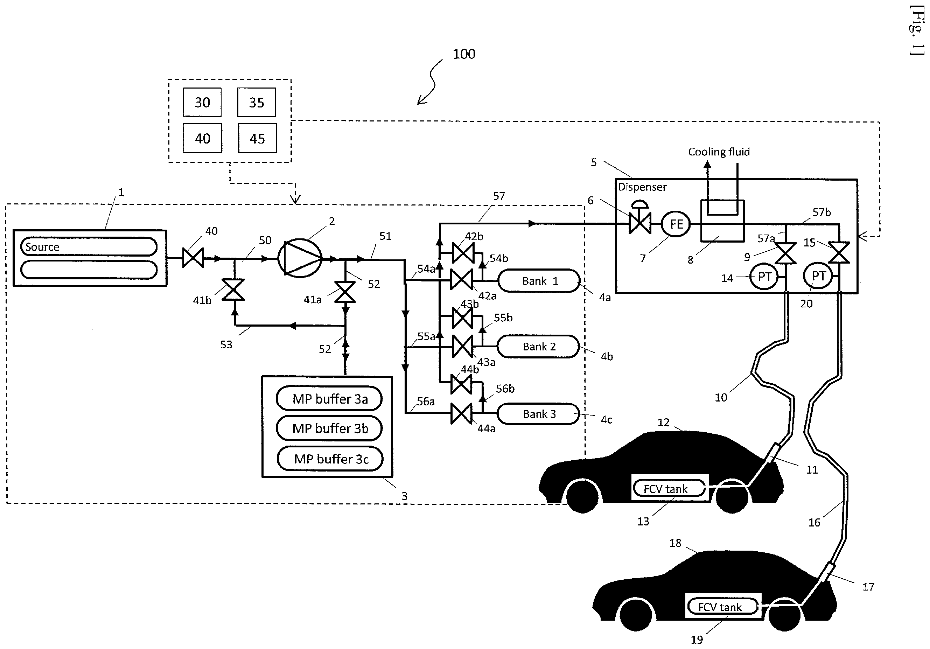

The hydrogen refueling system 1 of the first embodiment is explained by referring figures 1 to 4. The hydrogen refueling system 100 includes a H₂ supply source 1, a compressor 2, MP buffers 3a, 3b, 3c, HP buffer banks 4a, 4b, 4c and a dispenser 5. The following is described in detail.

H₂supply source 1 stores H₂which has a first pressure.

The compressor 2 increases H₂ pressure and transfer H₂ from H₂supply source 1 to MP buffers(3a, 3b, 3c), from H₂ supply source 1 to HP buffer banks(4a, 4b, 4c), or from MP buffers(3a, 3b, 3c) to HP buffer banks(4a, 4b, 4c) and/or the dispenser 5.

MP buffers (3a, 3b, 3c) store H₂ under a pressure which is higher than pressure of the H₂ supply source 1 and lower than the pressure of HP buffer banks(4a, 4b, 4c).

HP buffer banks(4a, 4b, 4c) store H₂ under various pressures which is higher than pressures of the H₂ supply source 1 and MP buffers(3a, 3b, 3c).

The dispenser 5 transfers H₂ from at least one container (e.g. H₂ supply source 1, MP buffers (3a, 3b, 3c), HP buffer banks(4a, 4b, 4c)) and/or from compressor discharge to the tank (13, 19) of a vehicle(12, 18).

The dispenser 5 includes only two H₂ refueling hoses 10, 16, only one H₂flow control valve 6, only one H₂ cooling heat exchanger 8, and only one H₂ flow metering device 7.

The heat exchanger 8 cools down H₂ before being transferred to the tank (13, 19) of a vehicle (12, 18). The heat exchanger 8 is fed with a cooling fluid to cool down H₂. The heat exchanger 8 is placed downstream the metering device 7 on the main line 57.

The control valve(6) is placed on a main line 57 through which is sent the H₂from the containers (1, 3a, 3b, 3c, 4a, 4b, 4c).

The metering device 7 is placed downstream the control valve 6 on the main line 57.

H₂flow control valve 6 is controlled based on the filling protocol (e.g. by controlling pressure at the outlet of dispenser (5) to follow a predefined pressure ramp).

First and second branch lines 57a, 57b are branched from the main line 57 downstream the heat exchanger 8.

First on-off valve 9 is placed on the first branch line 57a. Second on-off valve 15 is placed on the second branch line (57b).

First hose 10 has a first refueling nozzle 11 at its one end part and is connected the first branch line 57a at its another end part. Second hose 16 has a second refueling nozzle 17 at its one end part and is connected the second branch line 57b at its another end part.

Dispenser 5 includes first and second interface 21, 22. The first interface 21 includes first payment interface, first ticket system, and first metering display. The second interface 22 includes second payment interface, second ticket system, and second metering display.

First controller 30 control the compressor 2 and one or more valve(s)(40, 41a, 41b, 41a, 43a, 44a) placed on pipes (50, 52, 53, 54a, 55a, 56a) in such a way that, when the station is idle (i.e. no vehicle is refueled or is waiting), depending on pre-determined operation steps, H₂ is transferred from one container (1, 3a, 3b, 3c, 4a, 4b, 4c) to another, up to pre-determined target pressure value(s) (Pₛₑₜ) in recipient containers (3a, 3b, 3c, 4a, 4b, 4c), for example, in the case there is one MP buffer , in one operation step controlled by first controller 30, H₂ is transferred from H₂ supply source 1 to MP buffers (3 (3a, 3b, 3c)) through the compressor 2 until the pressure in MP buffer 3 reaches a pre-determined target pressure which is higher than the pressure of the H₂ supply source 1, and in other operation steps controlled by first controller 30, H₂ is transferred from MP buffers (3 (3a, 3b, 3c)) to one HP buffer banks (4a, 4b, 4c) through the compressor 2 until the pressure in HP buffer banks (4a, 4b, 4c) reaches a pre-determined target pressure which is higher than the pressure in MP buffers (3(3a, 3b, 3c)).

The data processor 35 reads the residual pressure in the tank (13, 19) of the vehicle (12,18) when one vehicle (12,18) is connected to be re-fueled. The residual pressure is provided or measured by using nozzle IR communication device or pressure sensor (14, 20).

Depending on residual pressure in vehicle tank(13, 19), depending on pressure in the containers (1, 3a, 3b, 3c, 4a, 4b, 4c), and depending on ambient temperature, the data processor 35 calculates target pressure value(s) (TP) in one or several container(s) (1, 3a, 3b, 3c, 4a, 4b, 4c) optimized to be sufficient to achieve complete refueling of connected vehicle (12,18).

The heat exchanger 8 being present, data processor 35 may as well calculate depending on residual pressure in vehicle tank (13, 19), depending on quantity of H₂ refueled in previous vehicle and depending on ambient temperature, sufficient conditions to achieve refueling of connected vehicle according to low H₂temperature refueling protocol, such as minimum time interval with previous vehicle or maximum temperature of the heat exchanger (8).

The second controller 40, when one vehicle (12,18) is connected to be re-fueled, uses the conditions calculated by the data processor 35 to decide and execute an optimized sequence that controls the compressor 2 and valves to reach target pressure value(s) (TP) in the container(s) (1, 3a, 3b, 3c, 4a, 4b, 4c) calculated by the data processor 35.

The optimized sequence is decided in such a way that the time for being able to reach the conditions calculated by the data processor 35 after connecting a refueling nozzle (11, 17) to the vehicle is a minimum time.

This minimum time is zero when sufficient conditions to achieve complete refueling of connected vehicle are already met when the refueling nozzle (11, 17) is connected to the vehicle.

Third controller 45 , when the conditions calculated by the data processor 35 are met, controls the compressor 2 and valves (40, 41a, 41b, 41a, 42b, 43a, 43b, 44a, 44b, 6, 9, 15) according to a pre-determined strategy and filling protocol, in such a way that H₂ is transferred from at least one container (1, 3a, 3b, 3c, 4a, 4b, 4c) to the tank (13, 19) of the vehicle (12, 18).

The first controller 30 and the second controller 40 may control one or more valves (40, 41a, 41b, 41a, 43a, 44a) which are placed on pipes(50, 52, 53, 54a, 55a, 56a) in order to transfer H₂ from one container (1, 3, 4a, 4b, 4c) to another, either directly or through the compressor 2.

Target pressure values(TP) in the containers (3a, 3b, 3c, 4a, 4b, 4c) calculated by the data processor 35 may be lower than the pre-determined target pressure value (Pₛₑₜ) in each recipient container (3a, 3b, 3c, 4a, 4b, 4c) used by first controller 30. In addition, target pressure values (TP) in HP buffer banks(4a, 4b, 4c) calculated by the data processor 35 may be the same value for all HP buffer banks or different values .

Based on a container order(HP buffer bank 4a, then HP buffer bank 4b, then HP buffer bank 4c) that may be calculated depending on remaining pressure in the containers (3a, 3b, 3c, 4a, 4b, 4c), the third controller 45 may control valves (42b, 43b, 44b, 6, 9, 15) to connect one of the containers (4a, 4b, 4c) to the FCV tank(13, 19) and then to refuel H₂ into the FCV tank by balancing pressures between the connected container and the FCV tank (13, 19), and then, after disconnecting the used container, to connect another of the containers (4a, 4b, 4c) to the FCV tank (13, 19) and then to refuel H₂ into the FCV tank (13, 19) by balancing pressures between the connected container and the FCV tank (13, 19). And then, the sequence may be repeated with other containers (4a, 4b, 4c), depending on a pre-defined strategy. For example, the containers order may be calculated to connect first the container having the lowest remaining pressure, and then follow the order of increasing remaining pressure in the containers used to refuel H₂.

When refueling H₂into the FCV tank (13, 19) by switching between containers, balancing pressures between the connected container and the FCV tank (13, 19) may be partial. Changing to the next container may be made when there is still a large pressure difference between the connected container (4a, 4b, 4c) and the FCV tank (13, 19), for example when the refueling flow rate required by fueling protocol cannot be maintained, due to the flow restrictions between the connected container (4a, 4b, 4c) and the FCV tank (13, 19).

The third controller 45 may control first refueling process which is configured to refuel the H₂ through the first hose 10 from the first refueling nozzle 11 into first FCV tank 13 of first vehicle 12. The third controller 45 may control second refueling process which is configured to refuel the H₂through the second hose 16 from the second refueling nozzle 17 into second FCV tank 19 of second vehicle 18.

In case of a first refueling process, the data processor 35 may acquire first residual pressure of the first FCV tank 13 which is connected with the first refueling nozzle 11 and may calculate sufficient conditions to achieve complete refueling of first vehicle 12. The second controller 40 may use the conditions calculated by data processor 35 to decide and execute an optimized sequence that controls the compressor 2 and valves to reach within a minimum time the target pressure value(s) (TP) in the container(s) (3a, 3b, 3c, 4a, 4b, 4c) calculated by the data processor 35. when the conditions calculated by data processor 35 are met, third controller 45 may proceed with refueling of first vehicle 12.

In case of the second refueling process, the data processor 35 may acquire second residual pressure of the second FCV tank 19 which is connected with the second refueling nozzle 17 and calculate sufficient conditions to achieve complete refueling of second vehicle 18. The second controller 40 may use the conditions calculated by data processor 35 to decide and execute an optimized sequence that controls the compressor 2 and valves to reach within a minimum time the target pressure value(s) (TP) in the container(s) (3a, 3b, 3c, 4a, 4b, 4c) calculated by the data processor 35. When transfer of H₂ with first nozzle (11) is finished and when the conditions calculated by data processor 35 are met, third controller 45 may proceed with refueling of second vehicle 18.

The first residual pressure may be measured by first pressure sensor 14 which is placed downstream the first on-off valve 9 on the first branch line 57a. The second residual pressure may be measured by second pressure sensor 20 which is placed downstream the second on-off valve 15 on the second branch line 57b.

The third controller 45 may control temperature and/or flow rate of cooling fluid which is sent to the heat exchanger 8 to control temperature of the H₂which is refueled into the FCV tank.

The second controller 40 may calculate an expected waiting time which is period for being able to start refueling process from after completing payment initiation or after connecting the nozzle to the first or second FCV tank and output the expected waiting time to output device. The second controller 40 may calculate an expected complete time which is period for completing refueling process from after completing payment initiation or after connecting the nozzle to the first or second FCV tank and output the expected complete time to output device. The output device is for example, display, speaker, another computer, server, memory.

### (method for embodiment 1)

The method for performing first refueling process which refuels H₂ to first FCV tank 13 of first vehicle 12 and second refueling process which refuels H₂to second FCV tank 19 of second vehicle 18, the first and second vehicles (12,18) being stopped in refueling range of only one dispenser 5, includes the following steps;
in case of a first refueling process, step of acquiring first residual pressure of the first FCV tank 13 which is connected with the first refueling nozzle 11 and calculating sufficient conditions to achieve complete refueling of first vehicle 12, step of using the conditions calculated by data processor (35) to decide and execute an optimized sequence that controls the compressor 2 and valves to reach within a minimum time the target pressure value(s) (TP) in the container(s) (3a, 3b, 3c, 4a, 4b, 4c) calculated by the data processor 35, step of proceeding with refueling of first vehicle 12 when the conditions calculated by data processor 35 are met, provided that H₂ transfer with second nozzle (17) is already finished,
in case of the second refueling process, step of acquiring second residual pressure of the second FCV tank 19 which is connected with the second refueling nozzle 17 and calculating sufficient conditions to achieve complete refueling of second vehicle 18, step of using the conditions calculated by data processor 35 to decide and execute an optimized sequence that controls the compressor 2 and valves to reach within a minimum time the target pressure value(s) (TP) in the container(s) (3a, 3b, 3c, 4a, 4b, 4c) calculated by the data processor 35, step of proceeding with refueling of second vehicle 18 when transfer of H₂ with first nozzle (11) is finished and when the conditions calculated by data processor 35 are met.

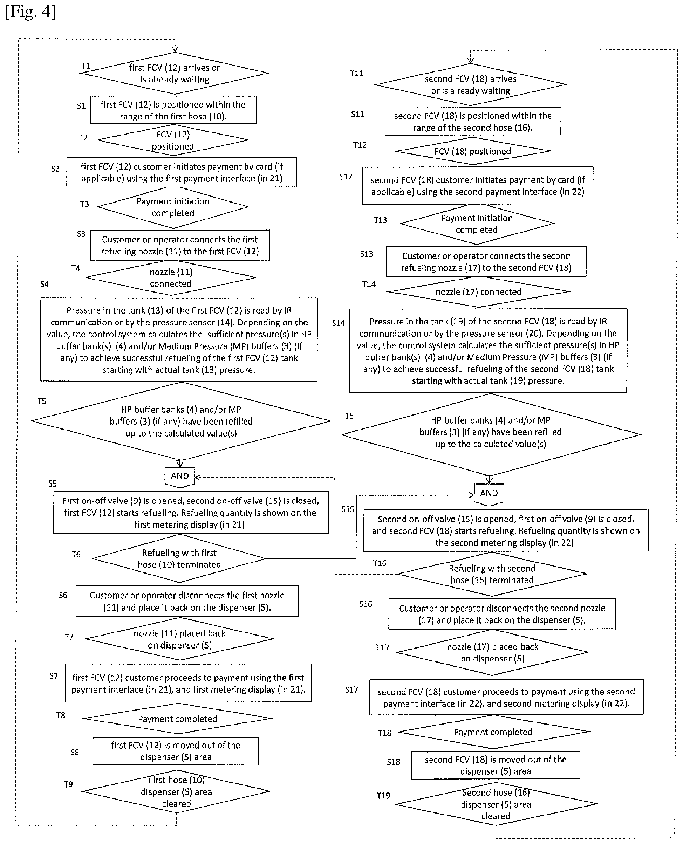

Figure 4 shows flowchart of Embodiment 1. The first refueling process of first FCV 12 is indicated on step 1 to step 8 and on transition 1 to transition 9, and the second refueling process of second FCV 18 is indicated on step 11 to step 18 and on transition 11 to transition 19. Transitions indicate conditions to go from one step to the next one.

Transition 1: first FCV 12 arrives or is already waiting.

In step 1, first FCV 12 is positioned within the range of the first hose 10.

Transition 2: first FCV 12 positioned.

In step 2, first FCV 12 customer initiates payment by card (if applicable) using the first payment interface in first interface 21.

Transition 3: payment initiation completed.

In step 3, customer or operator connects the first refueling nozzle 11 to the first FCV 12.

Transition 4: nozzle 11 connected to the fist FCV tank 13.

In step 4, pressure in the tank 13 of the first FCV 12 is read by IR communication device or by the pressure sensor 14. Depending on the value, the controller calculates the sufficient pressures in HP buffer banks and/or MP buffers (if any) to achieve successful refueling of the first FCV 12 tank starting with actual tank 13 pressure.

Transition 5: HP buffer banks and/or MP buffers (if any) have been refilled up to the calculated values. Before proceeding step 5, it is also checked that refueling with second hose 16 is not on-going (i.e. second refueling is not in step 15).

In step 5, first on-off valve 9 is opened, second on-off valve 15 is closed, first FCV 12 starts refueling. Refueling quantity is shown on the first metering display in first interface 21.

Transition 6: refueling with first hose (10) terminated.

In step 6, customer or operator disconnects the first nozzle 11 and place it back on the dispenser 5.

Transition 7: the first nozzle 11 placed back on dispenser 5.

In step 7, first FCV 12 customer proceeds to payment using the first payment interface in first interface 21, and first metering display in first interface 21.

Transition 8: payment completed.

In step 8, first FCV 12 is moved out of the dispenser 5 area.

Transition 9:first hose 10 of dispenser 5 area cleared. It is returned to check condition of transition 1. Until a new FCV arrives, first refueling is idle.

Transition 11: second FCV 18 arrives or is already waiting.

In step 11, second FCV 18 is positioned within the range of the second hose 16.

Transition 12: second FCV 18 positioned.

In step 12, second FCV 18 customer initiates payment by card (if applicable) using the second payment interface in second interface 22.

Transition 13: payment initiation completed.

In step 13, customer or operator connects the second refueling nozzle 17 to the second FCV 18.

Transition 14: second refueling nozzle 17 connected to second FCV tank 19. In step 14, pressure in the tank 19 of the second FCV 18 is read by IR communication device or by the pressure sensor 20. Depending on the value, the controller calculates the sufficient pressures in HP buffer banks and/or MP buffers (if any) to achieve successful refueling of the second FCV 18 tank starting with actual tank 19 pressure.

Transition 15: HP buffer banks and/or MP buffers (if any) have been refilled up to the calculated values. Before proceeding step 15, it is also checked that refueling with first hose 10 is not on-going (i.e. first refueling is not in step 5).

In step 15, second on-off valve 15 is opened, first on-off valve 9 is closed, and second FCV 18 starts refueling. Refueling quantity is shown on the second metering display in second interface 22.

Transition 16: refueling with second hose 16 terminated. In step 16, customer or operator disconnects the second nozzle 17 and place it back on the dispenser 5.

Transition 17: nozzle 17 placed back on dispenser 5.

In step 17, the second FCV 18 customer proceeds to payment using the second payment interface in second interface 22, and second metering display in second interface 22.

Transition 18: payment completed.

In step 18, the second FCV 18 is moved out of the dispenser 5 area.

Transition 19: second hose 16 area of dispenser 5 cleared. It is returned to check condition of transition 11. Until a new FCV arrives and first hose area already occupied, second refueling is idle.

Figures 2 and 3 show a different type of layout of first and second interface 21, 22 in dispenser 5.

## Claims

1. A hydrogen refueling system comprising:
at least one H2 supply source(1) that stores H2, which has a first pressure;
a compressor(2) that is able to increase H2 pressure and which can transfer H2 from at least one container selected from a MP Buffer (3, 3a, 3b, 3c), a Bank (4a, 4b, 4c) or the H2 supply source (1) to at least one other selected from the MP Buffer (3, 3a, 3b, 3c) and the Bank (4a, 4b, 4c);
one or several HP buffer bank(s) including at least one Bank (4a, 4b,4c) that stores H2 under various pressures, generally higher than the pressure of the H2 supply source(1);
optionally, one or more MP buffers (3, 3a, 3b,3c) that store H2 under a pressure, generally higher than the pressure of the H2 supply source (1) and generally lower than the pressure of HP buffer bank(s);
at least one dispenser (5), which can transfer H2 from at least one container selected among the H2 supply source (1), the MP Buffer (3, 3a,3b, 3c) and the Bank (4a, 4b, 4c) and/or from the compressor (2) discharge to a tank of a vehicle;
optionally, one heat exchanger (8), which can cool down H2 before being transferred to the tank of the vehicle and which is fed with a cooling fluid;
a first controller(30) that controls the compressor(2) and one or more valve(s) placed on pipe(s) in such a way that, when the station is idle, depending on pre-determined operation steps, H2 is transferred from at least one container selected from the H2 supply source (1), the MP Buffer (3, 3a, 3b, 3c) and the Bank (4a, 4b, 4c) to another at least one container selected from MP Buffer (3, 3a, 3b, 3c) and the Bank(4a, 4b, 4c), up to pre-determined target pressure value(s) (Pset) in recipient containers selected from at least one from MP Buffer (3, 3a, 3b, 3c) and Bank (4a,4b, 4c);
a data processor (35) that, when one vehicle is connected to be re-fueled, reads the residual pressure in the tank (13, 19) of the vehicle, using nozzle (11, 17) IR communication device or pressure sensor (14, 20) and, depending on residual pressure in vehicle tank(13, 19), and/or depending on the pressure in the containers, including at least one container selected from the H2 supply source (1), the MP Buffer (3, 3a,3b, 3c) and the Bank (4a, 4b, 4c), and/or depending on ambient temperature calculates target pressure value(s) (TP) in one or several containers, including at least one container selected from the H2 supply source (1), the MP Buffer (3, 3a, 3b, 3c) and the Bank(4a, 4b, 4c), which are sufficient conditions to achieve complete refueling of the connected vehicle;
a second controller (40) that, when one vehicle is connected to be re-fueled, uses the conditions calculated by the data processor (35) to decide and execute a sequence that controls the compressor (2) and valves to reach target pressure value(s) (TP) in the container(s), including at least one container selected from the H2 supply source (1), the MP Buffer (3, 3a,3b, 3c) and the Bank (4a, 4b, 4c), calculated by the data processor (35);
a third controller (45) that, when the conditions calculated by the data processor (35) are met, controls the compressor (2) and valve(s) according to a pre-determined strategy and filling protocol, in such a way that H2 is transferred from at least one container selected from the H2 supply source (1), the MP Buffer (3, 3a, 3b, 3c) and the Bank (4a, 4b, 4c) to the tank of the vehicle, wherein the sequence is decided in such a way, that the time for being able to reach the conditions calculated by the data processor (35) after connecting a refueling nozzle (11, 17) to the vehicle is a minimum time.

2. The system according to claim 1,
the at least one of dispenser(5) comprising:
a control valve(6) that is placed on a main line (57) through which is sent the H₂ from the containers;
a metering device(7) that is placed on the main line (57);
a heat exchanger(8) that is placed on the main line (57) and cools or warms the H₂ through the main line (57);
first and second branch lines (57a, 57b) that are branched from the main line (57);
first on-off valve(9) that is placed on the first branch line (57a);
second on-off valve(15) that is placed on the second branch line (57b);
first hose(10) that has a first refueling nozzle(11) at its one end part and is connected the first branch line (57a) at its another end part; and
second hose(16) that has a second refueling nozzle(17) at its one end part and is connected the second branch line (57b) at its another end part.

3. The system according to claim 1 or 2,
wherein the third controller(45) can control first refueling process which is configured to refuel the H₂ through the first hose(10) from the first refueling nozzle(11) into first FCV tank(13) of first vehicle(12), and / or
the third controller(45) can control second refueling process which is configured to refuel the H₂ through the second hose(16) from the second refueling nozzle(17) into second FCV tank(19) of second vehicle(18);
in case of a first refueling process,
the data processor(35) can acquire first residual pressure of the first FCV tank(13) which is connected with the first refueling nozzle(11) and can calculate sufficient conditions to achieve complete refueling of first vehicle (12);
second controller(40) can use the conditions calculated by data processor (35) to decide and execute a sequence that controls the compressor (2) and valves to reach the target pressure value(s) (TP) in the container(s), including least one container selected from H₂ supply source(1), MP Buffer 3(3a, 3b, 3c) and Bank(4a, 4b, 4c), calculated by the data processor (35);
when the conditions calculated by the data processor (35) are met, and provided that H₂ transfer with second nozzle (17) is already finished, third controller (45) can proceed with refueling of first vehicle (12);
in case of the second refueling process,
the data processor (35) can acquire second residual pressure of the second FCV tank(19) which is connected with the second refueling nozzle(17) and calculate sufficient conditions to achieve complete refueling of second vehicle (18);
second controller(40) can use the conditions calculated by data processor (35) to decide and execute a sequence that controls the compressor (2) and valves to reach the target pressure value(s) (TP) in the container(s), including at least one container selected from the H2 supply source (1), the MP Buffer (3, 3a, 3b, 3c) and the Bank (4a, 4b, 4c),
calculated by the data processor (35);
when transfer of H₂ with first nozzle (11) is finished and when the conditions calculated by the data processor (35) are met, third controller (45) can proceed with refueling of second vehicle (18).

4. A method using the hydrogen refueling system according to claim 3 for performing first refueling process which refuels H₂ to first FCV tank(13) of first vehicle(12) and second refueling process which refuels H₂ to second FCV tank(19) of second vehicle(18), the first and second vehicles(12,18) is stopped in refueling range of only one dispenser(5), comprising:
in case of a first refueling process,
acquiring first residual pressure of the first FCV tank(13) which is connected with the first refueling nozzle(11) and calculating sufficient conditions to achieve complete refueling of first vehicle (12);
using the conditions calculated by data processor (35) to decide and execute a sequence that controls the compressor (2) and valves to reach the target pressure value(s) (TP) in the container(s), including at least one container selected from the H2 supply source (1), the MP Buffer (3, 3a, 3b, 3c) and the Bank (4a, 4b, 4c), calculated by the data processor (35);
proceeding with refueling of first vehicle (12) when the conditions calculated by data processor (35) are met, and provided that H₂ transfer with second nozzle (17) is already finished;
in case of the second refueling process,
acquiring second residual pressure of the second FCV tank(19) which is connected with the second refueling nozzle(17) and calculating sufficient conditions to achieve complete refueling of second vehicle (18);
using the conditions calculated by data processor (35) to decide and execute a sequence that controls the compressor (2) and valves to reach the target pressure value(s) (TP) in the container(s), at least one container selected from the H2 supply source (1), the MP Buffer (3, 3a, 3b, 3c) and the Bank (4a, 4b, 4c), calculated by the data processor (35);
proceeding with refueling of second vehicle (18) when transfer of H₂ with first nozzle (11) is finished and when the conditions calculated by data processor (35) are met.

## Patentansprüche

1. Wasserstoffauftanksystem, umfassend:
mindestens eine H2-Versorgungsquelle (1), die H2 speichert, der einen ersten Druck aufweist;
einen Kompressor (2), der in der Lage ist, den H2-Druck zu erhöhen und der H2 von mindestens einem Behälter, der aus einem MP-Puffer (3, 3a, 3b, 3c), einer Bank (4a, 4b, 4c) oder der H2-Versorgungsquelle (1) ausgewählt wird, in mindestens einen anderen Behälter, der aus dem MP-Puffer (3, 3a, 3b, 3c) und der Bank (4a, 4b, 4c) ausgewählt wird, umfüllen kann;
eine oder mehrere HP-Pufferbänke, die mindestens eine Bank (4a, 4b, 4c) beinhalten, die H2 unter verschiedenen Drücken speichert, die im Allgemeinen höher sind als der Druck der H2-Versorgungsquelle (1);
optional einen oder mehrere MP-Puffer (3, 3a, 3b, 3c), die H2 unter einem Druck speichern, der im Allgemeinen höher ist als der Druck der H2-Versorgungsquelle (1) und im Allgemeinen niedriger ist als der Druck der HP-Pufferbanken;
mindestens eine Abgabevorrichtung (5), die H2 aus mindestens einem Behälter, der aus der H2-Versorgungsquelle (1), dem MP-Puffer (3, 3a, 3b, 3c) und der Bank (4a, 4b, 4c) ausgewählt wird, und/oder aus dem Austritt des Kompressors (2) in einen Tank eines Fahrzeugs umfüllen kann;
optional einen Wärmetauscher (8), der H2 abkühlen kann, bevor er in den Tank des Fahrzeugs umgefüllt wird, und der mit einer Kühlflüssigkeit versorgt wird;
eine erste Steuerung (30), die den Kompressor (2) und ein oder mehrere Ventile steuert, die auf eine solche Weise an den Leitungen angebracht sind, dass bei Leerlauf der Station in Abhängigkeit von vorbestimmten Betriebsschritten H2 aus mindestens einem Behälter, der aus der H2-Versorgungsquelle (1), dem MP-Puffer (3, 3a, 3b, 3c) und der Bank (4a, 4b, 4c) ausgewählt ist, in mindestens einen anderen Behälter, der aus dem MP-Puffer (3, 3a, 3b, 3c) und der Bank (4a, 4b, 4c) ausgewählt ist, bis zu vorbestimmten Zieldruckwerte (Pset) in Empfängerbehälter umgefüllt wird, die aus mindestens einem von dem MP-Puffer (3, 3a, 3b, 3c) und der Bank (4a, 4b, 4c) ausgewählt sind;
einen Datenprozessor (35), der, wenn ein Fahrzeug zum Betanken angeschlossen wird, den Restdruck in dem Tank (13, 19) des Fahrzeugs unter Verwendung einer IR-Kommunikationsvorrichtung eines Stutzens (11, 17) oder eines Drucksensors (14, 20) abliest und in Abhängigkeit vom Restdruck in dem Fahrzeugtank (13, 19) und/oder in Abhängigkeit vom Druck in den Behältern, die mindestens einen Behälter einschließen, der aus der H2-Versorgungsquelle (1), dem MP-Puffer (3, 3a, 3b, 3c) und der Bank (4a, 4b, 4c) ausgewählt ist, und/oder in Abhängigkeit von der Umgebungstemperatur die Zieldruckwerte (TP) in einem oder mehreren Behältern berechnet, die mindestens einen Behälter einschließen, der aus der H2-Versorgungsquelle (1), dem MP-Puffer (3, 3a, 3b, 3c) und der Bank (4a, 4b, 4c) ausgewählt ist, welche ausreichende Bedingungen für eine vollständige Betankung des angeschlossenen Fahrzeugs darstellen;
eine zweite Steuerung (40), die, wenn ein Fahrzeug zum Betanken angeschlossen wird, die von dem Datenprozessor (35) berechneten Bedingungen verwendet, um eine Reihenfolge zu bestimmen und auszuführen, die den Kompressor (2) und die Ventile steuert, um die Zieldruckwerte (TP) in den Behältern zu erreichen, die mindestens einen Behälter einschließen, der aus der H2-Versorgungsquelle (1), dem MP-Puffer (3, 3a, 3b, 3c) und
der Bank (4a, 4b, 4c) ausgewählt ist, die vom Datenprozessor (35) berechnet wurden;
eine dritte Steuerung (45), die, wenn die vom Datenprozessor (35) berechneten Bedingungen erfüllt sind, den Kompressor (2) und die Ventile entsprechend einer vorgegebenen Strategie und eines vorgegebenen Füllprotokolls auf eine solche Weise steuert, dass H2 aus mindestens einem Behälter, der aus der H2-Versorgungsquelle (1), dem MP-Puffer (3, 3a, 3b, 3c) und der Bank (4a, 4b, 4c) ausgewählt ist, in den Tank des Fahrzeugs umgefüllt wird, wobei die Reihenfolge auf eine solche Weise festgelegt wird, dass die Zeit zum Erreichen der vom Datenprozessor (35) berechneten Bedingungen nach dem Anschließen eines Betankungsstutzens (11, 17) an das Fahrzeug eine Mindestzeit beträgt.

2. System nach Anspruch 1,
wobei mindestens eine der Abgabevorrichtungen (5) umfasst:
ein Steuerventil (6), das an einer Hauptleitung (57) angebracht ist, durch die der H₂ aus den Behältern geleitet wird;
eine Dosiervorrichtung (7), die an der Hauptleitung (57) angebracht ist;
einen Wärmetauscher (8), der an der Hauptleitung (57) angebracht ist und den H₂ durch die Hauptleitung (57) kühlt oder erwärmt;
erste und zweite Zweigleitungen (57a, 57b), die von der Hauptleitung (57) abzweigen;
ein erstes Ein-/Aus-Ventil (9), das an der ersten Zweigleitung (57a) angebracht ist;
ein zweites Ein-/Aus-Ventil (15), das an der zweiten Zweigleitung (57b) angebracht ist;
einen ersten Schlauch (10), der an seinem einen Endabschnitt einen ersten Betankungsstutzen (11) aufweist und an seinem anderen Endabschnitt mit der ersten Zweigleitung (57a) verbunden ist; und
einen zweiten Schlauch (16), der an seinem einen Endabschnitt einen zweiten Betankungsstutzen (17) aufweist und an seinem anderen Endabschnitt mit der zweiten Zweigleitung (57b) verbunden ist; und

3. System nach Anspruch 1 oder 2,
wobei die dritte Steuerung (45) einen ersten Auftankvorgang steuern kann, der konfiguriert ist, um H₂ durch den ersten Schlauch (10) von dem ersten Betankungsstutzen (11) in den ersten FCV-Tank (13) des ersten Fahrzeugs (12) zu betanken, und/oder die dritte Steuerung (45) einen zweiten Auftankvorgang steuern kann, der konfiguriert ist, um H₂ durch den zweiten Schlauch (16) von dem zweiten Betankungsstutzen (17) in den zweiten FCV-Tank (19) des zweiten Fahrzeugs (18) zu betanken, und/oder
im Falle eines ersten Auftankvorgangs
kann der Datenprozessor (35) den ersten Restdruck des ersten FCV-Tanks (13) erfassen, der mit dem ersten Betankungsstutzen (11) verbunden ist, und ausreichende Bedingungen berechnen, um eine vollständige Betankung des ersten Fahrzeugs (12) zu erreichen;
kann die zweite Steuerung (40) die von dem Datenprozessor (35) berechneten Bedingungen verwenden, um eine Reihenfolge zu bestimmen und auszuführen, die den Kompressor (2) und die Ventile steuert, um die Zieldruckwerte (TP) in den Behältern zu erreichen, die mindestens einen Behälter einschließen, der aus der H₂-Versorgungsquelle (1), dem MP-Puffer (3, 3a, 3b, 3c) und der Bank (4a, 4b, 4c) ausgewählt ist, die vom Datenprozessor (35) berechnet wurden;
wenn die vom Datenprozessor (35) berechneten Bedingungen erfüllt sind und vorausgesetzt, dass die H₂-Umfüllung mit dem zweiten Stutzen (17) bereits abgeschlossen ist, kann die dritte Steuerung (45) mit dem Betanken des ersten Fahrzeugs (12) fortfahren;
im Falle des zweiten Auftankvorgangs
kann der Datenprozessor (35) den zweiten Restdruck des zweiten FCV-Tanks (19) erfassen, der mit dem zweiten Betankungsstutzen (17) verbunden ist, und ausreichende Bedingungen berechnen, um eine vollständige Betankung des zweiten Fahrzeugs (18) zu erreichen;
kann die zweite Steuerung (40) die von dem Datenprozessor (35) berechneten Bedingungen verwenden, um eine Reihenfolge zu bestimmen und auszuführen, die den Kompressor (2) und die Ventile steuert, um die Zieldruckwerte (TP) in den Behältern zu erreichen, die mindestens einen Behälter einschließen, der aus der H2-Versorgungsquelle (1), dem MP-Puffer (3, 3a, 3b, 3c) und der Bank (4a, 4b, 4c) ausgewählt ist, die vom Datenprozessor (35) berechnet wurden;
wenn das Umfüllen von H₂ mit dem ersten Stutzen (11) abgeschlossen ist und wenn die vom Datenprozessor (35) berechneten Bedingungen erfüllt sind, kann die dritte Steuerung (45) mit dem Betanken des zweiten Fahrzeugs (18) fortfahren.

4. Verfahren unter Verwendung des Wasserstoffauftanksystems nach Anspruch 3 zum Durchführen eines ersten Auftankvorgangs, bei dem H₂ in den ersten FCV-Tank (13) eines ersten Fahrzeugs (12) betankt wird, und eines zweiten Auftankvorgangs, bei dem H₂ in den zweiten FCV-Tank (19) eines zweiten Fahrzeugs (18) betankt wird, wobei das erste und das zweite Fahrzeug (12, 18) in Betankungsreichweite von nur einer Abgabevorrichtung (5) angehalten werden, umfassend:
im Falle eines ersten Auftankvorgangs
Erfassen des ersten Restdrucks des ersten FCV-Tanks (13), der mit dem ersten Betankungsstutzen (11) verbunden ist, und Berechnen ausreichender Bedingungen, um eine vollständige Betankung des ersten Fahrzeugs (12) zu erreichen;
Verwenden der von dem Datenprozessor (35) berechneten Bedingungen, um eine Reihenfolge zu bestimmen und auszuführen, die den Kompressor (2) und die Ventile steuert, um die Zieldruckwerte (TP) in den Behältern zu erreichen, die mindestens einen Behälter einschließen, der aus der H2-Versorgungsquelle (1), dem MP-Puffer (3, 3a, 3b, 3c) und der Bank (4a, 4b, 4c) ausgewählt ist, die vom Datenprozessor (35) berechnet wurden;
Fortsetzen des Betankens des ersten Fahrzeugs (12), wenn die vom Datenprozessor (35) berechneten Bedingungen erfüllt sind und vorausgesetzt, dass das Umfüllen von H₂ mit dem zweiten Stutzen (17) bereits abgeschlossen ist; im Falle des zweiten Auftankvorgangs
Erfassen des zweiten Restdrucks des zweiten FCV-Tanks (19), der mit dem zweiten Betankungsstutzen (17) verbunden ist, und Berechnen ausreichender Bedingungen, um eine vollständige Betankung des zweiten Fahrzeugs (18) zu erreichen;
Verwenden der von dem Datenprozessor (35) berechneten Bedingungen, um eine Reihenfolge zu bestimmen und auszuführen, die den Kompressor (2) und die Ventile steuert, um die Zieldruckwerte (TP) in den Behältern zu erreichen, die mindestens einen Behälter einschließen, der aus der H2-Versorgungsquelle (1), dem MP-Puffer (3, 3a, 3b, 3c) und der Bank (4a, 4b, 4c) ausgewählt ist, die vom Datenprozessor (35) berechnet wurden;
Fortsetzen des Betankens des zweiten Fahrzeugs (18), wenn das Umfüllen von H₂ mit dem ersten Stutzen (11) abgeschlossen ist und wenn die vom Datenprozessor (35) berechneten Bedingungen erfüllt sind.

## Revendications

1. Système de ravitaillement en hydrogène comprenant :
au moins une source d'approvisionnement en H2(1) qui stocke du H2, qui a une première pression ;
un compresseur (2) capable d'augmenter la pression du H2 et de transférer le H2 d'au moins un conteneur choisi parmi un tampon MP (3, 3a, 3b, 3c), une banque (4a, 4b, 4c) ou la source d'approvisionnement en H2 (1) vers au moins un autre choisi parmi le tampon MP (3, 3a, 3b, 3c) et la banque (4a, 4b, 4c) ;
une ou plusieurs banques de tampons HP comprenant au moins une banque (4a, 4b, 4c) qui stocke le H2 à différentes pressions, généralement supérieures à la pression de la source d'alimentation en H2 (1) ;
éventuellement, un ou plusieurs tampons MP (3, 3a, 3b, 3c) qui stockent le H2 à une pression généralement supérieure à la pression de la source d'approvisionnement en H2 (1) et généralement inférieure à la pression de la ou des banques de tampons HP ;
au moins un distributeur (5), qui peut transférer de le H2 à partir d'au moins un conteneur choisi parmi la source d'approvisionnement en H2 (1), le tampon MP (3, 3a, 3b, 3c) et la banque (4a, 4b, 4c) et/ou à partir de la décharge du compresseur (2) vers le réservoir d'un véhicule ;
éventuellement, un échangeur de chaleur (8), qui peut refroidir le H2 avant son transfert dans le réservoir du véhicule et qui est alimenté par un fluide de refroidissement ;
un premier contrôleur (30) qui commande le compresseur (2) et une ou plusieurs vannes placées sur les conduits de manière à ce que, lorsque la station est à l'arrêt, en fonction d'étapes de fonctionnement prédéterminées, le H2 soit transféré de l'au moins un conteneur choisi parmi la source d'approvisionnement en H2 (1), le tampon MP (3, 3a, 3b, 3c) et la banque (4a, 4b, 4c) vers un autre au moins un conteneur choisi parmi le tampon MP (3, 3a, 3b, 3c) et la banque (4a, 4b, 4c), jusqu'à des valeurs de pression cibles prédéterminées (Pset) dans des conteneurs choisis parmi au moins le tampon MP (3, 3a, 3b, 3c) et/ou la banque (4a, 4b, 4c) ;
un processeur de données (35) qui, lorsqu'un véhicule est connecté pour être ravitaillé, lit la pression résiduelle dans le réservoir (13, 19) du véhicule, à l'aide du dispositif de communication IR de la buse (11, 17) ou du capteur de pression (14, 20) et, en fonction de la pression résiduelle dans le réservoir du véhicule (13, 19), et/ou en fonction de la pression dans les conteneurs, y compris au moins un conteneur sélectionné parmi la source d'approvisionnement en H2 (1), le tampon MP (3, 3a, 3b, 3c) et la banque (4a, 4b, 4c), et/ou en fonction de la température ambiante, calcule la ou les valeurs de pression cibles (TP) dans un ou plusieurs conteneurs, dont au moins un conteneur choisi parmi la source d'approvisionnement en H2 (1), le tampon MP (3, 3a, 3b, 3c) et la banque (4a, 4b, 4c), qui sont des conditions suffisantes pour réaliser le ravitaillement complet du véhicule connecté ;
un deuxième contrôleur (40) qui, lorsqu'un véhicule est connecté pour être ravitaillé, utilise les conditions calculées par le processeur de données (35) pour décider et exécuter une séquence qui commande le compresseur (2) et les vannes afin d'atteindre la ou les valeurs de pression cibles (TP) dans le ou les conteneurs, y compris au moins un conteneur choisi parmi la source d'approvisionnement en H2 (1), le tampon MP (3, 3a, 3b, 3c) et la banque (4a, 4b, 4c), calculées par le processeur de données (35) ;
un troisième contrôleur (45) qui, lorsque les conditions calculées par le processeur de données (35) sont réunies, commande le compresseur (2) et la ou les vannes selon une stratégie et un protocole de remplissage prédéterminés, de manière à ce que le H2 soit transféré d'au moins un conteneur choisi parmi la source d'approvisionnement en H2 (1), le tampon MP (3, 3a, 3b, 3c) et la banque (4a, 4b, 4c) vers le réservoir du véhicule, la séquence étant décidée de telle sorte que le temps nécessaire pour atteindre les conditions calculées par le processeur de données (35) après avoir connecté un pistolet de ravitaillement (11, 17) au véhicule soit un temps minimum.

2. Système selon la revendication 1,
l'au moins un des distributeurs (5) comprenant :
une vanne de commande (6) placée sur une conduite principale (57) par laquelle le H₂ provenant des conteneurs est envoyé ;
un dispositif de mesure (7) placé sur la conduite principale (57) ;
un échangeur de chaleur (8) placé sur la conduite principale (57) et qui refroidit ou réchauffe le H₂ à travers la conduite principale (57) ;
un premier embranchement et un deuxième embranchement (57a, 57b) qui partent de la conduite principale (57) ; première vanne tout ou rien (9) placée sur le premier embranchement (57a) ;
deuxième vanne tout ou rien (15) placée sur le deuxième embranchement (57b) ;
un premier conduit (10) muni d'une première buse de ravitaillement (11) à l'une de ses extrémités et qui est relié au premier embranchement (57a) à l'autre extrémité ; et
un deuxième conduit (16) muni d'une deuxième buse de ravitaillement (17) à l'une de ses extrémités et qui est relié au deuxième embranchement (57b) à l'autre extrémité.

3. Système selon la revendication 1 ou la revendication 2,
dans lequel le troisième contrôleur (45) peut contrôler le premier processus de ravitaillement qui est configuré pour ravitailler le H₂ à travers le premier conduit (10) à partir de la première buse de ravitaillement (11) dans le premier réservoir FCV (13) du premier véhicule (12), et/ou
le troisième contrôleur (45) peut contrôler le deuxième processus de ravitaillement qui est configuré pour ravitailler le H₂ à travers le deuxième conduit (16) à partir de la deuxième buse de ravitaillement (17) dans le deuxième réservoir FCV (19) du deuxième véhicule (18) ;
dans le cas d'un premier processus de ravitaillement,
le processeur de données (35) peut acquérir la première pression résiduelle du premier réservoir FCV (13) qui est connecté à la première buse de ravitaillement (11) et peut calculer les conditions suffisantes pour réaliser le ravitaillement complet du premier véhicule (12) ;
le deuxième contrôleur (40) peut utiliser les conditions calculées par le processeur de données (35) pour décider et exécuter une séquence qui commande le compresseur (2) et les vannes afin d'atteindre la ou les valeurs de pression cibles (TP) dans le ou les conteneurs, y compris au moins un conteneur choisi parmi la source d'approvisionnement en H₂ (1), le tampon MP 3 (3a, 3b, 3c) et la banque (4a, 4b, 4c), calculés par le processeur de données (35) ;
lorsque les conditions calculées par le processeur de données (35) sont satisfaites, et à condition que le transfert de H₂ avec la deuxième buse (17) soit déjà terminé, le troisième contrôleur (45) peut procéder au ravitaillement du premier véhicule (12) ;
dans le cas du deuxième processus de ravitaillement,
le processeur de données (35) peut acquérir la deuxième pression résiduelle du deuxième réservoir FCV (19) qui est connecté à la deuxième buse de ravitaillement (17) et calculer les conditions suffisantes pour réaliser le ravitaillement complet du deuxième véhicule (18) ;
le deuxième contrôleur (40) peut utiliser les conditions calculées par le processeur de données (35) pour décider et exécuter une séquence qui commande le compresseur (2) et les vannes afin d'atteindre la ou les valeurs de pression cibles (TP) dans le ou les conteneurs, y compris au moins un conteneur choisi parmi la source d'approvisionnement en H2 (1), le tampon MP (3, 3a, 3b, 3c) et la banque (4a, 4b, 4c), calculées par le processeur de données (35) ;
lorsque le transfert du H₂ par la première buse (11) est terminé et que les conditions calculées par le processeur de données (35) sont satisfaites, le troisième contrôleur (45) peut procéder au ravitaillement du deuxième véhicule (18) .

4. Procédé utilisant le système de ravitaillement en hydrogène selon la revendication 3 pour effectuer un premier processus de ravitaillement qui ravitaille en H₂ le premier réservoir FCV (13) du premier véhicule (12) et un deuxième processus de ravitaillement qui ravitaille en H₂ le deuxième réservoir FCV (19) du deuxième véhicule (18), le premier véhicule et le deuxième véhicule (12, 18) étant arrêtés dans la plage de ravitaillement d'un seul distributeur (5), le procédé comprenant les étapes suivantes :
dans le cas d'un premier processus de ravitaillement, acquérir la première pression résiduelle du premier réservoir FCV (13) qui est connecté à la première buse de ravitaillement (11) et calculer les conditions suffisantes pour réaliser le ravitaillement complet du premier véhicule (12) ;
utiliser les conditions calculées par le processeur de données (35) pour décider et exécuter une séquence qui commande le compresseur (2) et les vannes pour atteindre la ou les valeurs de pression cibles (TP) dans les réservoirs, y compris au moins un conteneur choisi parmi la source d'approvisionnement en H2 (1), le tampon MP (3, 3a, 3b, 3c) et la banque (4a, 4b, 4c), calculées par le processeur de données (35) ;
procéder au ravitaillement du premier véhicule (12) lorsque les conditions calculées par le processeur de données (35) sont satisfaites, et à condition que le transfert de H₂ avec la deuxième buse (17) soit déjà terminé ;
dans le cas du deuxième processus de ravitaillement, acquérir la deuxième pression résiduelle du deuxième réservoir FCV (19) relié à la deuxième buse de ravitaillement (17) et calculer des conditions suffisantes pour réaliser le ravitaillement complet du deuxième véhicule (18) ;
utiliser les conditions calculées par le processeur de données (35) pour décider et exécuter une séquence qui commande le compresseur (2) et les vannes pour atteindre la ou les valeurs de pression cibles (TP) dans les conteneurs, au moins un conteneur étant choisi parmi la source d'approvisionnement en H2 (1), le tampon MP (3, 3a, 3b, 3c) et la banque (4a, 4b, 4c), calculées par le processeur de données (35) ;
procéder au ravitaillement du deuxième véhicule (18) lorsque le transfert de H₂ par la première buse (11) est terminé et que les conditions calculées par le processeur de données (35) sont satisfaites.
